# EUROPÄISCHE PATENTSCHRIFT

(11) **EP 0 417 042 B1**
(45) Veröffentlichungstag und Bekanntmachung des Hinweises auf die Patenterteilung: **18.05.1994**
(21) Anmeldenummer: 90810652.9
(22) Anmeldetag: 29.08.1990
(51) Int. Cl.: G03B 27/73

(54) **Photoelektrische Abtastvorrichtung**
Photoelectric scanning device
Dispositif de balayage photo-électrique

(30) Priorität: 07.09.1989 CH 3244/89
(43) Veröffentlichungstag der Anmeldung: 13.03.1991
(73) Patentinhaber: GRETAG IMAGING AG, CH-8105 Regensdorf (CH)
(72) Erfinder: Frick, Beat, Dr., CH-8107 Buchs (CH); Kraft, Walter, Dr., CH-8049 Zürich (CH); Ursprung, Karl, Dr., CH-8156 Oberhasli (CH)
(74) Vertreter: Kleewein, Walter, Dr.

(56) Entgegenhaltungen:
- DE-A- 2 459 456
- DE-A- 2 627 694
- FR-A- 2 621 710
- US-A- 3 944 362

## Beschreibung

Die Erfindung betrifft einen photoelektrisch Abtaster gemäss Oberbegriff von Patentanspruch 1.

Derartige Abtaster ermöglichen eine automatische Analyse der Farbzusammensetzung insbesondere von Kopiervorlagen. Ein solcher Abtaster ist beispielsweise aus der US-A-3,944,362 bekannt. Bei dem dort beschriebenen Abtaster wird die abzutastende Kopiervorlage in Form eines Films vom Licht einer Lichtquelle beaufschlagt, nachdem diese Licht zuvor von einem Diffusor gestreut worden ist. Nachdem das Licht durch den Film hindurchgetreten ist, tritt es in Lichtleitfasern ein. Das aus diesen Lichtleitfasern am anderen Ende wieder austretende Licht beaufschlagt eine rotierbare Scheibe, die eine Oeffnung aufweist. Diese Oeffnung gibt beim Rotieren nacheinander das aus den einzelnen Lichtleitfasern austretende Licht frei, welches detektiert wird.

Ein weiterer Abtaster ist aus der FR-A-2,621,710 bekannt. Bei dem dort beschriebenen Abtaster beaufschlagt ein Teil des von einer Lichtquelle kommenden Lichts nach Durchdringen eines Filters, das in einer Oeffnung eines rotierbaren Filterrades angeordnet ist, eine Lichtleitfaser. Nachdem dieses Licht am anderen Ende dieser Lichtleitfaser wieder ausgetreten ist, durchdringt es einen Diffusor und beaufschlagt dann die Kopiervorlage in Form eines Films. Nach dem Hindurchtreten durch den Film tritt es in weitere Lichtleitfasern ein, die es zu Photozellen führen. Zusätzlich wird ein anderer Teil des Lichts von der Lichtquelle zu einem photoempfindlichen Papier geführt.

Ein weiterer Abtaster ist aus der DE-A-24 59 456 der Anmelderin bekannt. Bei dem dort beschriebenen Abtaster wird das von einer Lichtquelle kommende Abtastlicht durch Reflexion an den Spiegelflächen eines motorgetriebenen Spiegelrades quer zur Längsrichtung eines abzutastenden Films (Kopiervorlage) über den Film geführt.

Ausserdem ist noch ein weiterer Abtaster aus der DE-A-26 27 694 bekannt. Bei dem dort beschriebenen Abtaster beaufschlagt das Licht einer Lichtquelle durch einen Diffusor hindurch die Kopiervorlage in Form eines Films. Das durch den Film hindurchtretende Licht wird von Lichtleifasern aufgenommen, deren Lichteinfallsflächen quer zur Transportrichtung des Films über den Film hinweg angeordnet sind. Die Lichtemissionsflächen, also die anderen Enden der Lichtleitfasern, sind auf einem Kreis angeordnet. Diesen Lichtemissionsflächen ist eine Drehscheibe zugewandt, die mindestens drei Fenster aufweist, in denen Filter für die Farben Rot, Grün und Blau angeordnet sind. Zum Empfangen des aus den Lichtemissionsflächen austretenden und die Filter der Drehscheibe hindurchtretenden Lichts umfasst der Abtaster photoelektrische Wandler. Ausserdem umfasst er noch zwei Mess- bzw. Detektionseinrichtungen: Eine erste zur Bestimmung einer Rotationsstellung der Drehscheibe, wobei diese erste Detektionseinrichtung immer dann ein Signal liefert, wenn sich ein Filter einer ganz bestimmten Farbe vor den Lichtemissionsflächen befindet, und eine zweite zur Abgabe eines Befehls zur Dichtemessung, wenn die Filter jeder Farbe vor den Lichtemissionsflächen zu liegen kommen.

Von solchen Abtastern wird beispielsweise in Hochleistungsprintern Gebrauch gemacht. Bei einem dort eingesetzten weiteren bekannten Abtaster wirft eine Lichtquelle ein Lichtbündel auf eine kreisförmige Scheibe, die in geringem Abstand parallel zur Ebene der Kopiervorlage rotiert und die Oeffnungen aufweist, um einen abzutastenden Punkt auf der Kopiervorlage festzulegen. Das von der Kopiervorlage kommende Licht wird von einer Detektionseinheit aufgenommen.

Die Tendenz geht bei der Abtastung von Kopiervorlagen hin zu immer höherer Auflösung. Dazu sind immer kleinere und immer mehr Abtastpunkte pro Kopiervorlage erforderlich, was in verschiedener Weise erhöhte Leistungsfähigkeit der Detektoren bzw. der anschliessenden Elektronik erfordert. Zum Einen muss die Abtastzeit pro Punkt möglichst kurz sein, da die Anzahl der Punkte pro Kopiervorlage bei höherer Auflösung grösser ist, zum Anderen muss die minimal detektierbare Lichtleistung geringer sein, da bei gleicher Lichtintensität im Abtastpunkt, aber kleineren Abmessungen diese Punktes, die auf den Detektor auftreffende Lichtleistung entsprechend geringer ist. Bei den oben erwähnten Abtastern wird das Licht zuerst durch einen Diffusor gestreut und beaufschlagt dann die Kopiervorlage. Verkleinert man durch anschliessende Massnahmen die Abmessungen der Abtastpunkte, so ist dies stets mit einem Verlust an Lichtleistung, die auf den Detektor auftrifft, verbunden. Dadurch wird die Detektion des Abtastlichts erheblich erschwert.

Ausgehend davon ist es die Aufgabe der Erfindung, bei kleineren Abmessungen des Abtastpunktes die Intensität in diesem Punkt zu erhöhen, um am Empfangsort eine grössere Lichtleistung zu erhalten und damit die Detektion zu vereinfachen.

Diese Aufgabe wird durch die Erfindung, wie sie im Anspruch 1 definiert ist, gelöst. Im folgenden wird die Erfindung anhand der Zeichnung näher erläutert; es zeigen:
- Fig. 1: ein Ausführungsbeispiel einer erfindungsgemässen Abtastvorrichtung in perspektiv-schematischer Darstellung
- Fig. 2: eine Aufsicht auf eine abzutastende Vorlage

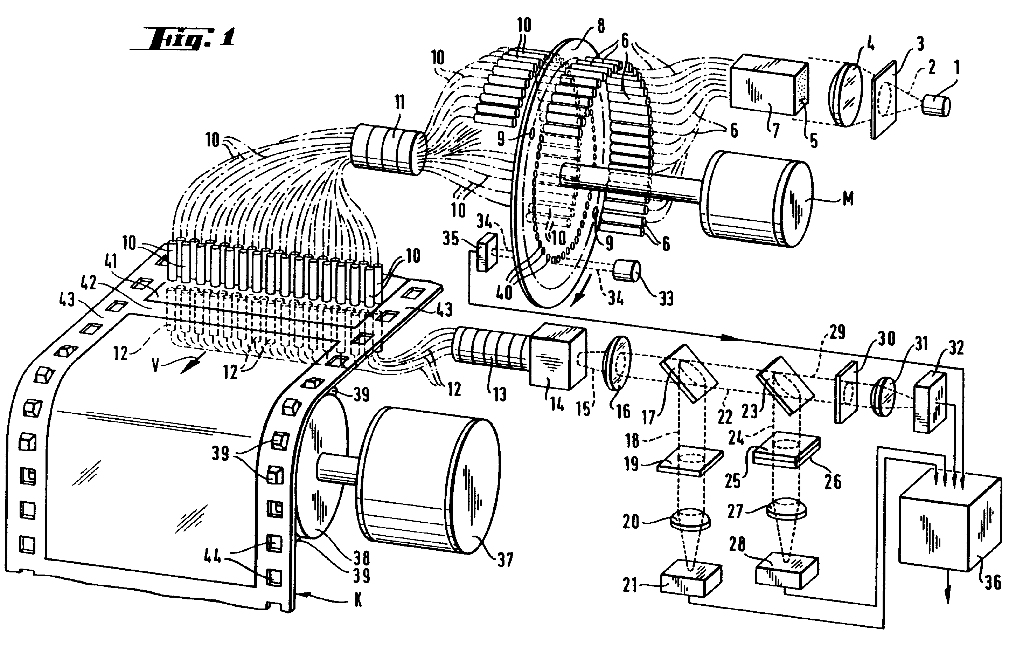

Gemäss Fig. 1 umfasst die Vorrichtung eine Lichtquelle 1, ein Wärmeschutzfilter 3, eine Kondensorlinse 4, Lichtleitfasern bzw.-faserbündel 6, 10 und 12, eine von einem Motor M antreibbare Scheibe 8 mit Oeffnungen 9, und eine Empfangseinheit. Die Empfangseinheit umfasst ihrerseits einen Kondensor 16, zwei Interferenzspiegel 17 und 23, drei Absorptionsfilter 19, 25 und 30, ein Wärmeschutzfilter 26, drei Detektorlinsen 20, 27 und 31, sowie drei Detektoren 21, 28 und 32. Ausserdem umfasst die Vorrichtung noch eine weitere Lichtquelle 33 und einen Detektor 35, sowie eine Elektronik 36, einen Motor 37 und eine Transportwalze 38.

Das von der Lichtquelle 1 emittierte divergierende Strahlenbündel 2 durchdringt den Wärmeschutzfilter 3, welcher den zu grossen Anteil des roten Lichtes im Strahlenbündel 2 reduziert. Dieses Strahlenbündel 2 wird von der Kondensorlinse 4 auf die Stirnseite der Zuleitfasern bzw. -faserbündel 6 fokussiert. Dabei soll möglichst viel der von der Lichtquelle 1 emittierten Lichtmenge in die Zuleitfasern bzw. -faserbündel 6 eingekoppelt werden (Wenn im folgenden von "einer Faser" bzw. von "Fasern" die Rede ist, so gelten die Beschreibungen sinngemäss ebenfalls für ein bzw. mehrere Faserbündel an Stelle von einer Faser bzw. mehreren Fasern). Die Zuleitfasern 6 enden in unmittelbarer Nähe der vom Motor M angetriebenen, um ihr Zentrum rotierenden, Scheibe 8 etwa senkrecht zu dieser Scheibe 8, die nahe ihrem Umfang zwei Oeffnungen 9 aufweist, welche sich diametral gegenüberliegen. Die Enden der Fasern 6 sind dabei in äquidistanten Abständen in einem 180°-Sektor möglichst nahe an der Kreisbahn der Oeffnungen 9 angeordnet.

Auf der anderen Seite der Scheibe 8 endet jeweils koaxial zum Ende jeder Faser 6 je eine weiterer Lichtleitfaser 10, ebenfalls in geringem Abstand zur Scheibe 8 und etwa senkrecht zu dieser. Die Oeffnungen 9 der Scheibe 8 geben dann jeweils das aus den Enden der Fasern 6 austretende Licht auf die koaxiale lichtaufnehmende Faser 10 frei und zwar so, dass, nachdem die eine Oeffnung während einer halben Umdrehung der Scheibe 8 das Licht sequentiell auf die einzelnen Fasern 10 freigegeben hat, die andere Oeffnung während der anderen halben Umdrehung der Scheibe 8 das Licht sequentiell auf die einzelnen Fasern 10 freigibt. Auf diese Weise werden alle Enden der Fasern 10 mit der doppelten Frequenz der Rotation der Scheibe 8 mit Licht beaufschlagt. Die Fasern 10 führen zur Ebene der Vorlage K und enden in geringem Abstand zu jener Ebene und senkrecht zu dieser. Die Faserenden sind in äquidistanten Abständen längs der Abtastzeile bzw. der Abtastzeilen angeordnet. Das aus den Faserenden austretende Licht beleuchtet die Vorlage K jeweils konzentriert in einem Fleck (Abtastpunkt), wobei jedem einzelnen dieser Abtastpunkte separat eine Faser 10 zugeordnet ist. Die Vorlage, beispielsweise in Form eines Films K, wird in ihrem weiteren Verlauf über eine Transportwalze 38 geführt, welche, vom Motor 37 angetrieben, den Film K in Vorschubrichtung V fortbewegt.

Jedem Ende einer Lichtzuleitfaser 10 ist auf der anderen Seite des Films K ein entsprechendes Ende einer Lichtableitfaser 12 koaxial zum Ende der jeweiligen Faser 10 zugeordnet. Die Enden der Lichtableitfaser 12 sind wieder in geringem Abstand zur Ebene des Films K und senkrecht hierzu angeordnet. Diese Faserenden nehmen das vom Abtastpunkt kommende Licht auf und führen es beispielsweise mittels einer Steckverbindung 14 auf eine Empfangseinheit, wie sie im folgenden beispielsweise beschrieben ist. Alternativ zu der oben beschriebenen Vorrichtung kann die Scheibe 8 auch in einer Unterbrechung der Ableiter 12 angeordnet sein.

Die Empfangseinheit umfasst drei im wesentlichen gleichartige Empfangs- und Detektionsanordnungen, jeweils eine für das Frequenzband des blauen, roten und grünen Lichts, die jeweils ein Absorptionsfilter 19, 25 und 30, eine Detektorlinse 20, 27 und 31, und einen Detektor 21, 28 und 32 enthalten. Hinzu kommt für das Frequenzband des roten Lichtes noch ein Wärmeschutzfilter 26, das sich unmittelbar an das Absorptionsfilter 25 anschliesst. Zur Trennung der einzelnen Frequenzbänder enthält diese Empfangs- und Detektionseinheit zwei Interferenzspiegel 17 und 23, die unter einem Winkel von etwa 45° zur Achse des von der Kopiervorlage kommenden, aus der jeweiligen Ableitfaser 12 austretenden, Strahlenbündels 15 bzw. des vom ersten Spiegel 17 durchgelassenen Strahlenbündels 22 angeordnet sind.

Das von Film K kommende, aus der jeweiligen Ableitfaser 12 austretende, Strahlenbündel 15 trifft durch eine Linse 16 hindurch auf den ersten Interferenzspiegel 17. Dieser filtert aus dem Spektrum grob das Frequenzband des blauen Lichts 18 heraus, indem er blaues Licht reflektiert und die übrigen Spektralanteile ungehindert passieren lässt. Das grob herausgefilterte blaue Licht 18 gelangt durch ein Absorptionsfilter 19 hindurch, das aus dem grob herausgefilterten Frequenzband ein feineres herausfiltert, via einer Detektorlinse 20 auf den Detektor 21. Das vom Spiegel 17 durchgelassene Strahlenbündel 22, welches um das Frequenzband des blauen Lichts verringert ist, trifft auf einen zweiten Interferenzspiegel 23, der aus dem noch übrigen Spektrum grob das Frequenzband des roten Lichtes 24 nach dem gleichen Prinzip wie Spiegel 17 herausfiltert. Das durch Reflexion herausgefilterte rote Licht, gelangt durch ein zweites Absorptionsfilter 25, das aus dem grob herausgefilterten Frequenzband ein feineres herausfiltert, nach Passieren eines Wärmeschutzfilters 26 und einer Detektorlinse 27 auf den entsprechenden Detektor 28. Das vom Spiegel 23 durchgelassene, um die Frequenzbänder des blauen und roten Lichts verringerte Strahlenbündel 29 durchdringt einen dritten Absorptionsfilter 30, der aus dem restlichen Spektrum das Frequenzband des grünen Lichtes herausfiltert und wird mittels einer Detektorlinse 31 auf den entsprechenden Detektor 32 abgebildet.

Die von den Detektoren 21, 28 und 32 generierten elektrischen Signale werden zu einer Elektronik 36 geleitet. Diese Elektronik 36 hat die Aufgabe, die von den Detektoren 21, 28 und 32 der Empfangseinheit kommenden Signale auszuwerten. Dazu muss sie eine Information erhalten, zu welchem Zeitpunkt die jeweils von den Detektoren 21, 28 und 32 zu ihr geleiten Signale gemessen werden sollen, also ein Taktsignal. Ein solches Taktsignal wird erzeugt, indem die nahe der Scheibe 8 angeordnete Lichtquelle 33 ein Strahlenbündel 34 emittiert, welches die Scheibe 8 beaufschlagt, die ausser den beiden Oeffnungen 9 noch weitere Oeffnungen 40 aufweist, welche in kleineren Abstand vom Scheibenzentrum als die Oeffnungen 9 auf dem vollen Umfang eines Kreises in äquidistanten Abständen zueinander angeordnet sind. Die Oeffnungen 40 sind so angeordnet, dass sie immer dann, wenn sich eine Oeffnung 9 genau zwischen den der Scheibe 8 zugewandten Enden der Fasern 6 und 10 befindet, das Strahlenbündel 34 auf den Detektor 35 freigeben. Der Detektor 35 wandelt das empfangene optische Signal in ein elektrisches um. Das so gewonnene elektrische Taktsignal wird der Elektronik 36 zugeführt.

Wie bereits erwähnt, steht die Bezeichnung "Faser" ebenfalls stellvertretend für ein Faserbündel. Da die Flexibilität von Lichtleitfasern mit zunehmendem Faserdurchmesser abnimmt, wird in der Regel dem Faserbündel der Vorzug gegeben, in dem viele einzelne, dünne Lichtleitfasern (z.B. 50 µm Einzelfaserdurchmesser) von einer Ummantelung (z.B. PVC) umgeben sind, die das Faserbündel zusammenhält und zusätzlich vor äusseren Einflüssen schützt.

Von den "Fasern" 6, 10, 12 sind in Fig. 1 aus zeichnerischen Gründen nur wenige repräsentativ dargestellt. In der Praxis verwendet man etwa 20 bis 50 solcher Faserbündel. Diese Faserbündel werden ausser in der Nähe der Stellen, an denen sie unterbrochen sind, in Kabeln 7, 11, 13 zusammengefasst, welche die Faserbündel gemeinsam umhüllen. Die Enden der Lichtzuleitfaserbündel 6 sind beispielsweise über die Querschnittfläche 5 eines solchen die Faserbündel 6 umfassenden Kabels 7 verteilt, in die das Licht eingekoppelt wird. Die lichtabgebenden Enden dieser Faserbündel 6 sind, wie die jenseits der Scheibe 8 koaxialen lichtaufnehmenden Enden der Faserbündel 10 in Oeffnungen jeweils einer zur Scheibe 8 parallel angeordneten Platte gesteckt und eben eingeschliffen. Die Breite des Spaltes zwischen diesen Platten beträgt etwa 1,2 mm.

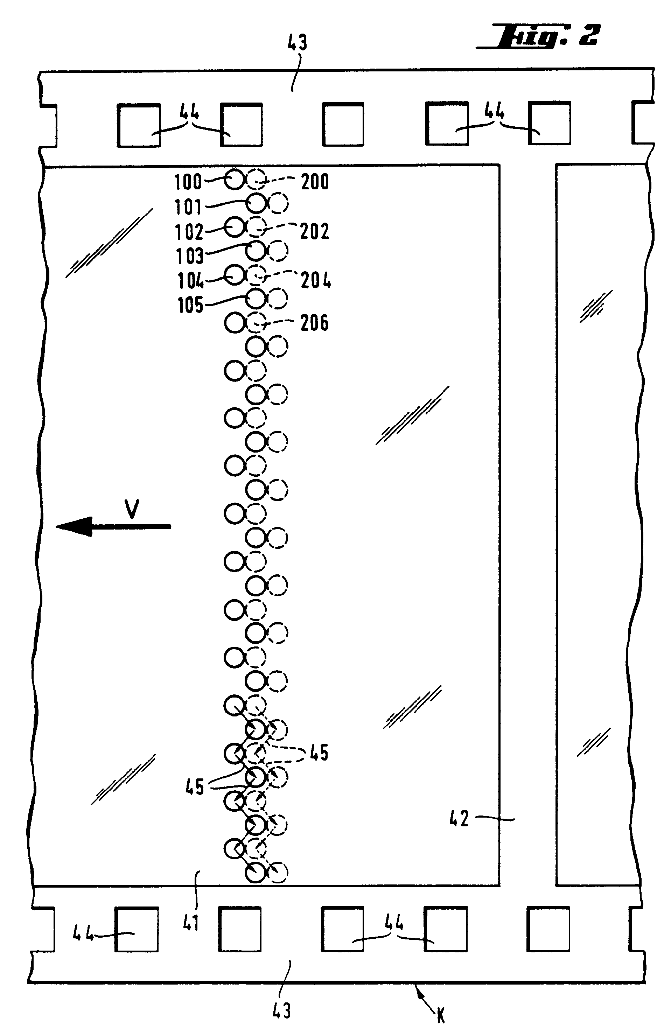

Die Faserbündel 10 führen das Licht zur Ebene des Films K. Da handelsübliche Faserbündel einen Durchmesser von etwa 1 mm und mehr aufweisen, andererseits das Bildfeld eines 135er-Films (24 mm x 36 mm -Film) in etwa 1000 Abtastpunkte mit ca. 30 Abtastpunkten je Zeile zerlegt werden soll, können die Faserbündel aufgrund ihres Durchmessers nicht längs einer einzigen Zeile angeordnet sein. Um trotzdem die gewünschte hohe Auflösung zu erzielen, sind die lichtabgebenden Enden der Faserbündel 10 längs zwei benachbarten, parallel zueinander verlaufenden, Zeilen angeordnet und stehen in Vorschubrichtung V gesehen auf Lücke. Die Reihenfolge der Faserbündelenden am Film K stimmt dabei mit der Reihenfolge der Faserbündelenden an der Scheibe 8 überein, so dass sich ein Abtastschema ergibt, wie es in Fig. 2 dargestellt ist und weiter unten erläutert wird. Dabei bewegt sich der Abtastpunkt zickzackförmig von einem Ende einer solchen Doppelzeile zum anderen. Es ist auch möglich, dass sich der Abtastpunkt nach einem anderen Schema über den Film K bewegt; für diesen Fall muss die Elektronik 36 eine Information erhalten, die die eindeutige Zuordnung jedes Abtastsignals zu dem jeweiligen Bildpunkt ermöglicht. Jenseits des Films K sind die lichtaufnehmenden Enden der Ableitfaserbündel 12 koaxial zu den lichtabgebenden Enden der Zuleitfaserbündel 10 angeordnet. Die Enden zu beiden Seiten des Films K sind wie die Enden an der Scheibe 8 in Oeffnungen jeweils einer zu Vorlagenebene parallelen Platte gesteckt und eben eingeschliffen. Die Breite des Spaltes zwischen den Platten, in dem der Film K transportiert wird, beträgt etwa 1,8 mm. Die Ableitfaserbündel 12 führen das von den Abtastpunkten kommende Licht mit Hilfe einer Steckverbindung 14 einem Spektrometer zu.

Der Durchmesser der Lichtleitfaserbündel 6, 10 und 12 ist nach jeder Unterbrechung der Faserbündel in Flussrichtung zum Empfänger kleiner. Die Zuleitfaserbündel 6, in die das von der Lichtquelle 1 kommende Licht eingekoppelt wird, weisen einen Durchmesser von 1,65 mm auf, die Zuleitfaserbündel 10 einen Durchmesser von etwa 1,16 mm und die Ableitfaserbündel 12 nur noch einen der Detektorfläche angepassten Durchmesser von 0,4 mm. Durch die jeweilige Verringerung des Durchmessers der Lichtleitfaserbündel wird die Leuchtdichte stets erhalten und die Detektion erleichtert.

Die Funktionsweise des dargestellten Abtasters ist aus Fig. 2 erkennbar, welche eine Aufsicht auf ein Stück eines solchen Films K zeigt, dessen Bildfelder 41 durch Stege 42 getrennt sind und der mit einer Seitenrandperforation 44 versehen ist. Beim Abtasten bewegt sich der Abtastlichtpunkt 100, 101, 102, 103 usw. längs einer Doppelzeile quer zur Vorschubrichtung V des Filmstreifens über das Bildfeld 41. Diese Bewegung erfolgt zickzackförmig im Wechsel zwischen den zwei benachbarten Zeilen, so wie es durch die Pfeile 45 angedeutet ist. Bei der darauffolgenden Abtastung der nächsten Doppelzeile werden die Zwischenräume 200, 202, 204, 206, usw., die bei der vorangegangenen Abtastung aufgrund des zickzackförmigen Wechsels des Abtastpunktes zwischen den zwei Zeilen entstanden sind, abgetastet. De facto ist eine Bildzeile also in die Summe der Abtastpunkte aus zwei aufeinanderfolgenden Doppelzeilenabtastungen zerlegt. In einer Zeile entspricht also die Gesamtheit der Kreise 101, 103, 105 usw. und der strichlierten Kreise 200, 202, 204 usw. der Auflösung einer Zeile in einzelne Abtastpunkte. Nach der Zusammensetzung der einzelnen Zeilen kann man so ein nahezu quadratisches Raster von z.B. 1 mm x 1 mm erhalten. Das Raster ist in der Praxis nicht exakt quadratisch, da der Motor 37 den Film kontinuierlich transportiert und daher die Zeilen nicht exakt senkrecht zur Vorschubrichtung V verlaufen. Die Geschwindigkeit des Lichtpunktes ist jedoch im Vergleich zur Transportgeschwindigkeit sehr gross, sodass die Abweichungen von der "optimalen Geometrie" sehr gering sind.

Die Zusammensetzung eines Bildes aus den einzelnen Abtastpunkten wird von einem Rechenprogramm vorgenommen, das die Reihenfolge der Entstehung der Abtastpunkte berücksichtigt. In der Praxis (z.B. in Photoprintern) werden meist die Abtastwerte mehrerer aufeinanderfolgender Bilder gespeichert und vor der nachfolgenden Belichtung zur Berechnung der jeweils erforderlichen Lichtmenge und zur Steuerung der Farbverschlüsse bildweise abgerufen.

Wie bereits erwähnt, eignet sich die oben beschriebene Abtastvorrichtung besonders für den Einsatz in Kopiergeräten.

## Patentansprüche

1. Photoelektrische Abtastvorrichtung, bei der das von einer Lichtquelle (1) emittierte Licht über eine abzutastende transparente Vorlage (K) geführt und hinter dieser von einem Empfänger aufgenommen wird, wobei im Strahlengang hinter der Vorlage Lichtleitfasern bzw. -faserbündel (12) vorgesehen sind, die als Lichtableitfasern bzw. -faserbündel bezeichnet sind und die das Licht zum Empfänger führen, und mit einer im Strahlengang angeordneten um ihr Zentrum herum motorisch rotierbaren kreisförmigen Scheibe (8), die eine Öffnung aufweist, welche jeweils nur das Licht durch eine Faser bzw. Faserbündel hindurch auf den Empfanger freigibt, dadurch gekennzeichnet, dass zwischen der Lichtquelle (1) und der Vorlagenebene als Lichtzuleitfasern bzw. -faserbündel bezeichnete optische Lichtleitfasern bzw. -faserbündel (6, 10) vorgesehen sind, wobei jedem Abtastpunkt je eine solche Lichtzuleitfaser bzw. ein solches Faserbündel (10) separat zugeordnet ist, deren/dessen lichtabgebende Enden in geringem Abstand von der Vorlagenebene und vorzugsweise zumindest angenähert senkrecht zu dieser angeordnet sind, und wobei die lichtaufnehmenden Enden der Lichtableiffasern bzw. -faserbündel (12) jeweils koaxial zu den lichtabgebenden Enden der Lichtzuleiffasern bzw. -faserbündel (10) angeordnet sind, dass sowohl die Lichtzuleitfasern bzw. -faserbündel (10) als auch die Lichtableiffasern bzw. -faserbündel (12) langs zwei benachbarten, parallel zueinander verlaufenden Zeilen angeordnet sind und senkrecht zur Zeilenrichtung betrachtet auf Lücke stehen, dass ferner entweder die Lichtzuleiffasern bzw. -faserbündel (10) oder die Lichtableiffasern bzw. -faserbündel (12) durch einen Spalt unterbrochen sind, in welchem die rotierbare kreisförmige Scheibe (8) angeordnet ist, wobei die Faserenden bzw. die Enden der Faserbündel vor und nach dieser Scheibe (8) jeweils paarweise koaxial zueinander angeordnet sind und zwar jeweils in geringem Abstand von der Scheibe (8) und zumindest vorzugsweise senkrecht zu dieser entlang der Kreisbahn der Öffnung, und dass die Faserenden bzw. die Enden der Faserbündel an der Scheibe (8) und entlang der beiden Abtastzeilen so angeordnet sind, dass von zwei an der Scheibe (8) unmittelbar aufeinanderfolgenden Faserenden bzw. Enden von Faserbündeln das erste der ersten Zeile und das zweite dem in der folgenden Lücke der ersten Zeile in der zweiten Zeile angeordneten Faserende zugeordnet ist und so weiter.

2. Abtastvorrichtung nach Anspruch 1, dadurch gekennzeichnet, dass die Faserenden bzw. die Enden der Faserbündel entlang der Scheibe (8) und an der Vorlagenebene in derselben Reihenfolge angeordnet sind.

3. Abtastvorrichtung nach einem der Ansprüche 1 oder 2, dadurch gekennzeichnet, dass die Scheibe (8) insgesamt n einander diametral gegenüberliegende Öffnungen (9) aufweist, und dass die gesamte Anordnung der koaxialen Faserenden bzw. Enden der Faserbündel auf einen 360°/n-Sektor beschränkt ist.

4. Abtastvorrichtung nach einem der Ansprüche 1 bis 3, dadurch gekennzeichnet, dass der Durchmesser der Lichtleitfasern bzw. -faserbündel nach jeder Unterbrechung der Fasern bzw. Faserbündel in Flussrichtung zum Empfänger kleiner wird.

5. Abtastvorrichtung nach einem der vorangehenden Ansprüche, dadurch gekennzeichnet, dass die zur Vorlage führenden und/oder die das von der Vorlage kommende Licht aufnehmenden Lichtleitfasern bzw. -faserbündel (6,10,12) grösstenteils als Kabel (7,11,13) zusammengefasst sind.

6. Abtastvorrichtung nach einem der vorangehenden Ansprüche, dadurch gekennzeichnet, dass die Lichtableitfasern bzw. -faserbündel (12) einem gemeinsamen einzigen Empfänger zugeführt sind.

## Claims

1. A photoelectric scanner in which the light emitted by a light source (1) is passed through a transparent master (K) to be scanned and is received downstream of the master by a receiver, there being provided in the beam path downstream of the master optical fibres or fibre bundles (12) which are referred to as take-off optical fibres or fibre bundles and which guide the light to the receiver, and which comprises a circular disk (8) which is arranged in the beam path, can be rotated about its centre by a motor and has an orifice which allows the light to pass to the receiver through only one fibre or fibre bundle at a time, wherein optical fibres or fibre bundles (6, 10) referred to as lead-in optical fibres or fibre bundles are provided between the light source (1) and the plane of the master, one such lead-in optical fibre or one such fibre bundle (10) being assigned separately to each scanning point, the light-emitting ends of which optical fibres or fibre bundles are arranged at a short distance from and preferably at least approximately perpendicular to the plane of the master, and the light-receiving ends of the take-off optical fibres or fibre bundles (12) being arranged coaxially with respective light-emitting ends of the lead-in optical fibres or fibre bundles (10), wherein both the lead-in optical fibres or fibre bundles (10) and the take-off optical fibres or fibre bundles (12) are arranged along two adjacent, parallel lines and are aligned with the gaps in the other line when viewed perpendicular to the direction of the lines, wherein either the lead-in optical fibres or fibre bundles (10) or the take-off optical fibres or fibre bundles (12) are furthermore interrupted by a gap in which the rotatable circular disk (8) is arranged, the ends of the fibres or fibre bundles being arranged coaxially one with another in pairs upstream and downstream of that disk (8) and at a short distance from the disk (8) and at least preferably perpendicular thereto along the circular path of the orifice, and wherein the ends of the fibres or fibre bundles are so arranged at the disk (8) and along the two scanning lines that the first of two optical fibre or fibre bundle ends immediately following each other at the disk (8) is assigned to the first line and the second is assigned to the fibre end arranged in the second line, in the gap that follows in the first line, and so on.

2. A scanner according to claim 1, wherein the ends of the fibres or fibre bundles are arranged in the same sequence along the disk (8) and at the plane of the master.

3. A scanner according to either claim 1 or claim 2, wherein the disk (8) has a total of n diametrically opposed orifices (9), and wherein the entire arrangement of the coaxial fibre or fibre bundle ends is restricted to a sector of 360°/n.

4. A scanner according to any one of claims 1 to 3, wherein the diameter of the optical fibres or fibre bundles becomes smaller after each interruption of the fibres or fibre bundles in the direction of flow towards the receiver.

5. A scanner according to any one of the preceding claims, wherein the optical fibres or fibre bundles (6, 10, 12) leading to the master and/or receiving the light coming from the master are for the most part combined in the form of cables (7, 11, 13).

6. A scanner according to any one of the preceding claims, wherein the take-off optical fibres or fibre bundles (12) are passed to a single common receiver.

## Revendications

1. Dispositif d'exploration photoélectrique, dans lequel la lumière émise par une source lumineuse (1) est animée d'un mouvement de balayage sur un original transparent (K) à explorer et est reçue derrière celui-ci par un récepteur, dans lequel des fibres conductrices de lumière ou des faisceaux de fibres conductrices de lumière (12), appelés fibres d'évacuation de lumière ou faisceaux de fibres d'évacuation de lumière, sont prévus dans le trajet des rayons derrière l'original et conduisent la lumière vers le récepteur, et comprenant un disque circulaire (8), placé dans le trajet des rayons et pouvant être entraîné en rotation autour de son centre par un moteur, disque qui présente une ouverture qui laisse chaque fois passer seulement la lumière traversant une fibre ou un faisceau de fibres pour la transmission jusqu'au récepteur, caractérisé en ce que des fibres optiques conductrices de lumière ou des faisceaux de fibres optiques conductrices de lumières (6, 10), appelés fibres d'amenée de lumière ou faisceaux de fibres d'amenée de lumière, sont prévus entre la source lumineuse (1) et le plan de l'original, avec coordination séparée à chaque point d'exploration d'une telle fibre d'amenée de lumière ou d'un tel faisceau de fibres d'amenée de lumière (10), dont l'extrémité ou les extrémités délivrant la lumière sont disposées à faible distance du plan de l'original et, de préférence, au moins à peu près perpendiculairement par rapport à ce plan, les extrémités réceptrices de lumière des fibres d'évacuation de lumière ou des faisceaux de fibres d'évacuation de lumière (12) étant disposées chaque fois coaxialement aux extrémités délivrant la lumière des fibres ou des faisceaux de fibres d'amenée de lumière (10); en ce que tant les fibres ou faisceaux de fibres d'amenée de lumière (10) que les fibres ou faisceaux de fibres d'évacuation de lumière (12) sont disposés le long de deux lignes voisines, parallèles entre elles, et en quinconce à angle droit par rapport à la direction des lignes, en ce que, en outre, soit les fibres ou faisceaux de fibres d'amenée de lumière (10), soit les fibres ou faisceaux de fibres d'évacuation de lumière (10) sont interrompus par une fente dans laquelle est disposé le disque circulaire rotatif (8), les extrémités des fibres ou les extrémités des faisceaux de fibres avant et après ce disque (8) étant agencées chaque fois coaxialement entre elles par paire et cela chaque fois à faible distance du disque (8) dans une orientation au moins de préférence perpendiculaire à celui-ci, le long du trajet circulaire de l'ouverture, et en ce que les extrémités des fibres ou les extrémités des faisceaux de fibres situées en regard du disque (8) et le long des deux lignes d'exploration, sont agencées de manière que, parmi deux extrémités de fibres ou deux extrémités de faisceaux de fibres qui se suivent directement en regard du disque (8), la première soit coordonnée à la première ligne et la deuxième soit coordonnée à l'extrémité de fibre disposée dans la deuxième ligne au droit de l'intervalle suivant de la première ligne, et ainsi de suite.

2. Dispositif d'exploration selon la revendication 1, caractérisé en ce que les extrémités des fibres ou les extrémités des faisceaux de fibres sont disposées dans le même ordre de succession le long du disque (8) et sur le plan de l'original.

3. Dispositif d'exploration selon la revendication 1 ou 2, caractérisé en ce que le disque (8) possède, en tout, n ouvertures (9) situées diamétralement les unes en face des autres, et en ce que l'ensemble de la disposition des extrémités coaxiales des fibres ou des faisceaux de fibres en regard du disque est limité à un secteur de 360°/n.

4. Dispositif d'exploration selon une des revendications 1 à 3, caractérisé en ce que le diamètre des fibres conductrices de lumière ou des faisceaux de fibres conductrices de lumière devient plus petit, dans le sens de la transmission vers le récepteur, après chaque interruption des fibres ou des faisceaux de fibres.

5. Dispositif d'exploration selon une des revendications précédentes, caractérisé en ce que les fibres conductrices de lumière ou les faisceaux de fibres conductrices de lumière (6, 10, 12) menant à l'original et/ou recevant la lumière venant de l'original, sont rassemblés en majeure partie en câbles (7, 11, 13).

6. Dispositif d'exploration selon une des revendications précédentes, caractérisé en ce que les fibres d'évacuation de lumière ou les faisceaux de fibres d'évacuation de lumière (12) sont amenés à un seul récepteur commun.
